# EUROPEAN PATENT APPLICATION

(11) **EP 0 955 713 A1**
(43) Date of publication of application: **10.11.1999**
(21) Application number: 99201392.0
(22) Date of filing: 04.05.1999
(51) Int. Cl.: H02G 15/105, H02G 15/188

(54) **Cable sleeve**

(30) Priority: 04.05.1998 NL 1009054
(71) Applicant: Lovink-Enertech B.V., 7061 DT Terborg (NL)
(72) Inventor: Brus, Bernard Louis, 7007 HM Doetinchem (NL); Kaptein, Bartholomeus Johannes, 7071 CS Ulft (NL)
(74) Representative: Schumann, Bernard Herman Johan

(57) **Abstract**

A cable sleeve comprises a number of components for mutual connection, which sleeve serves as envelope for the connection between two electrical cables, each comprising only one electrically conductive core, an insulating jacket extending therearound, a semiconducting jacket extending therearound and an insulating outer jacket extending therearound, which sleeve after assembly comprises the following components:
a shield which is provided with perforations and wholly encases the mutually pre-connected cores, which shield must be connected to the semiconducting jackets of both cables and has an inner surface with smooth, rounded shapes; and
   an envelope wholly enclosing the pre-placed shield and comprising two mutually connectable shells of plastic;
   which envelope engages via respective flexible and elastic sealing rings on the insulating outer jackets of the two cables;
into which sleeve after assembly an optionally curing liquid insulating mass is poured via a filling opening present in the envelope, which insulating mass can fill the cavity inside the shield via said perforations and which is slow-curing such that rising air bubbles can leave this cavity via the perforations.

## Description

The invention relates to a cable sleeve. In the use of cable sleeves intended and adapted to accommodate three-phase conductors of the cables of a three-phase network, the electric field strengths eliminate each other, at least at a certain distance. No special measures hereby have to be taken to prevent problems with high field strengths.

In a cable sleeve adapted to accommodate the connection between conductive cores in only one phase, at least in a configuration in which the field strengths do not eliminate each other, specific measures must be taken according to the invention to ensure that, using simple means, potentially high field strengths are prevented with great efficiency from having an adverse effect on the quality of the total assembled cable sleeve, including the incorporated insulating mass. Said problems can occur in the usual sleeves of the prior art particularly when sleeves are used as part of cables for relatively high voltages, for instance 10 kV and higher.

The invention now provides a cable sleeve comprising
a number of components for mutual connection, which sleeve serves as envelope for the connection between two electrical cables, each comprising only one electrically conductive core, an insulating jacket extending therearound, a semiconducting jacket extending therearound, a conductive jacket extending therearound, for instance tubular fabric of metal threads, and an insulating outer jacket extending therearound, said jackets of which cores have their respective end zones removed in stepwise manner and are thus made accessible and graspable, which sleeve after assembly comprises the following components:
   a shield of electrically conductive or semiconducting material which is provided with perforations and wholly encases the mutually preconnected cores, which shield must be connected to the semiconducting jackets of both cables, which shield has an inner surface with smooth, rounded shapes; and
      an envelope wholly enclosing the pre-placed shield and comprising two mutually connectable shells of plastic, for instance polyethylene, with a thickness of about 2-10 mm, preferably about 4-6 mm;
      which envelope engages via respective flexible and elastic sealing rings, for instance of silicone rubber, on the insulating outer jackets of the two cables;
   into which sleeve after assembly an optionally curing liquid insulating mass, for instance polyurethane or a silicone mass, is poured via a filling opening present in the envelope, which insulating mass can fill the cavity inside the shield via said perforations and which is slow-curing such that rising air bubbles can leave this cavity via the perforations.

In order to obtain with certainty a reliable coupling between the shield and the semiconducting jackets, the sleeve according to the invention can advantageously have the special feature that the shield has two through-holes for passage of the respective cables, which holes are arranged in end zones of stretchable material.

A preferred embodiment has the special feature that the end zones are separate and each have a general funnel shape and have a mouth rim with a coupling edge bent rearward via a smooth, rounded transition zone for coupling to respective coupling edges on the free ends of a non-flexible casing provided with said perforations.

The shield can be manufactured from a suitable conductive material, for instance copper.

A specific embodiment has the special feature that the conductivity of the materials of the shield lies in the range of 10²-10⁵ Ohm/cm, preferably 10³-10⁴ Ohm per centimetre.

This latter variant can have the feature that the shield contains carbon, for instance carbon fibres.

It is noted in this respect that plastics can generally be made semiconducting by adding a certain quantity of carbon in for instance powder form or in the form of fibres. These fibres can very appropriately have lengths in the order of 1-2 mm.

The shield has a substantial function and must have a pre-determined inner shape. Since in the case of materials displaying little elastic deformability there is the danger of denting and other damage during assembly, in this respect it is recommended according to the invention that the shield has a considerable elastic deformability. The elastic deformability is determined by the material properties and the thickness. A very appropriate choice is for instance semiconductor polycarbonate with a thickness in the range of about 0.5-3 mm.

Very simple to assemble is an embodiment in which the shells of the shield can be mutually coupled by snap connections.

The funnel-shaped end zones can consist of any suitable material. Very suitable is an embodiment in which the end zones consist of a semiconducting elastomer, for instance silicone rubber, EPDM, TPE.

In accordance with a particular aspect of the invention, the sleeve according to the invention has the feature that the insulating mass consists of a silicone material. After being inserted the silicone material can cure to a solid silicone mass. Alternatively, use can be made of a single-component silicone mass, which only cures in the case water enters, which may for instance be the case after damage to the envelope.

Another embodiment has the special feature that the insulating mass consists of polyurethane.

The sleeve is preferably embodied such that after assembly the shield is connected for electrical conduction to the mutually connected free ends of the conductive cable jackets.

This latter embodiment can advantageously be provided with clamping means for pressing the mutually connected free ends of the conductive cable jackets with clamping force against the shield.

Very simple is an embodiment in which the clamping means comprise spring means.

A preferred embodiment has the special feature that after assembly an electrically conductive non-ferromagnetic flexible casing extends round the shield in electrically conductive contact therewith.

This latter embodiment can advantageously have the special feature that the casing comprises a gauze of copper wire.

Said variants with clamping means and a conductive flexible casing can advantageously be embodied such that the clamping means hold the shield, the mutually connected free ends of the conductive cable jackets and the casing in an electrically conductive contact with each other.

The invention will now be elucidated with reference to the annexed drawings.

In the drawings:
figure 1 shows a cross-section of a cable sleeve arranged around the connection between two electrical cables;
figure 2 shows a partially exploded view of a cable sleeve in a preliminary stage of assembly; and
figure 3 shows a cut-away perspective view of an assembled cable sleeve.

Cables 1 and 2 comprise, as seen from inside to outside, electrically conductive cores respectively 3, 4, insulating jackets 5, 6, semiconducting jackets 7, 8 consisting of semiconducting polyethylene, a metal gauze tubular jacket 9, 10 and an insulating outer jacket 11, 12. By means of a casing 13 of conductive material, for instance aluminium, in which cores 3, 4 are inserted with their ends, cores 3, 4 are mutually connected in electrically conductive manner by means of compressed or strangling zones 14, 15. Flexible semiconducting funnels 16, 17 are arranged in elastically clamping manner round semiconducting jackets 7, 8 such that they are in electrical connection with the jackets 7, 8. Funnels 16, 17 are mutually connected by means of shells 18, 19 provided with perforations respectively 20, 21. Shells 18, 19 can be manufactured from electrically conductive or semiconducting material. An appropriate choice is polycarbonate with a substantial proportion of carbon fibres of a length of about 1-2 mm. Funnels 16, 17 can very suitably be manufactured from a thermoplastic elastomer or TPE. Silicone rubber or EPDM can also be used. A thermoplastic elastomer has the advantage that the funnels can be manufactured very simply by for instance injection moulding.

The free ends of jackets 9, 10 are mutually connected in electrically conductive manner by means of a clamping element 22. If desired, the relevant ends can be electrically insulated or can be held at a distance from adjacent components by means of spacers.

An envelope consisting of two shells 23, 24 wholly encloses the described shield 16, 17, 18, 19 and engages with end zones on the insulating outer jackets 11, 12 of cables 1, 2 via silicone rubber sealing rings 25, 26 such that the space 27 inside envelope 23, 24 is completely sealed relative to cables 1 and 2. The upper shell 23 has a filling opening 30 closed by a closure cap 28 with snap edge 29, via which opening the space 27 can be filled with liquid curable insulating mass. Via perforations 20, 21 the moulding material can also completely fill the inner space 31 of shield 16, 17, 18, 19. During the still liquid phase, prior to a (possible) substantial curing of the moulding material, air which may possibly still be present can escape in the form of air bubbles via the upper apertures or perforations 20. It is noted that the perforations can take any suitable form. As already stated above, all forms of the inner surface of shield 16, 17, 18, 19 have smooth and rounded shapes. This also applies to the edges of perforations 20, 21, which are preferably rounded, for instance with radius of curvature of 2 mm.

The filling mass is a liquid curing material, for instance polyurethane or a silicone mass. The introduction of a liquid mass has the advantage that herewith a good contact to the cables is ensured and variations in the cable diameter can easily be accommodated. Curing of the mass has the advantage that leakage is hereby effectively prevented.

Very important for the sleeve according to the invention is that the shield effectively shields the electric field around the connection between cores 3, 4. Shell parts 18, 19 can consist of deep-drawn copper or other electrically conductive material or can be embodied in semiconducting thermoplastic material, for instance polycarbonate. In addition to air bubbles, other inhomogeneities can also leave space 31 via perforations 20, 21. Any inhomogeneity provides a potential source of interference due to the potentially increased electrical field strength locally.

It is noted that the form of envelope 23, 24 is of little relevance to a good operation. For reasons of symmetry and smooth shapes, the shield 16, 17, 18, 19 preferably has a generally rotation-symmetrical shape. Envelope 23, 24 can in principle have any suitable shape, also a non-rotation-symmetrical shape if desired.

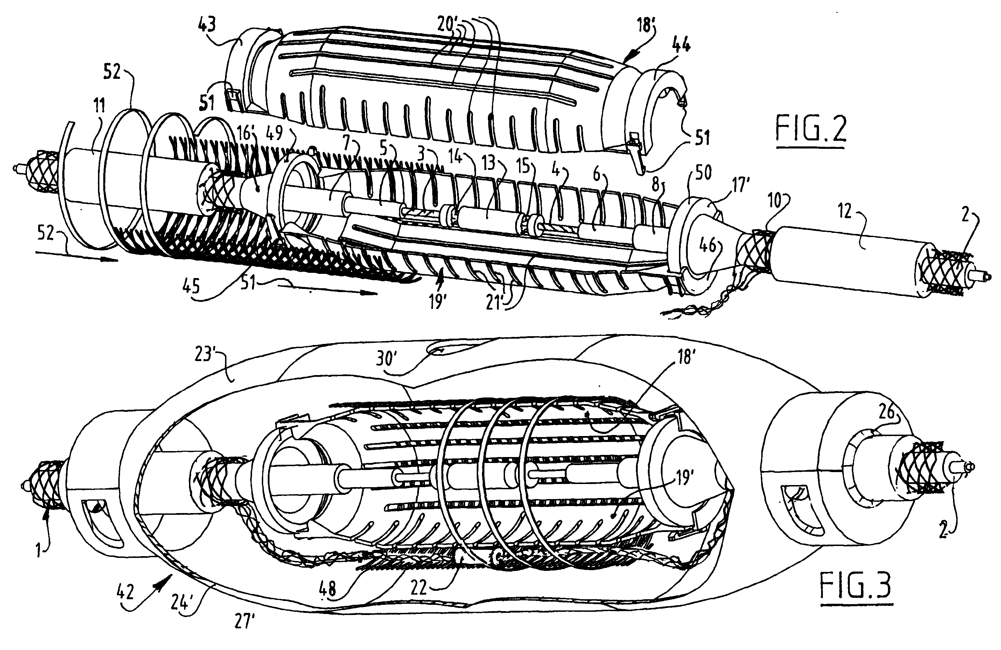

Figures 2 and 3 show another embodiment of the cable sleeve according to the invention.

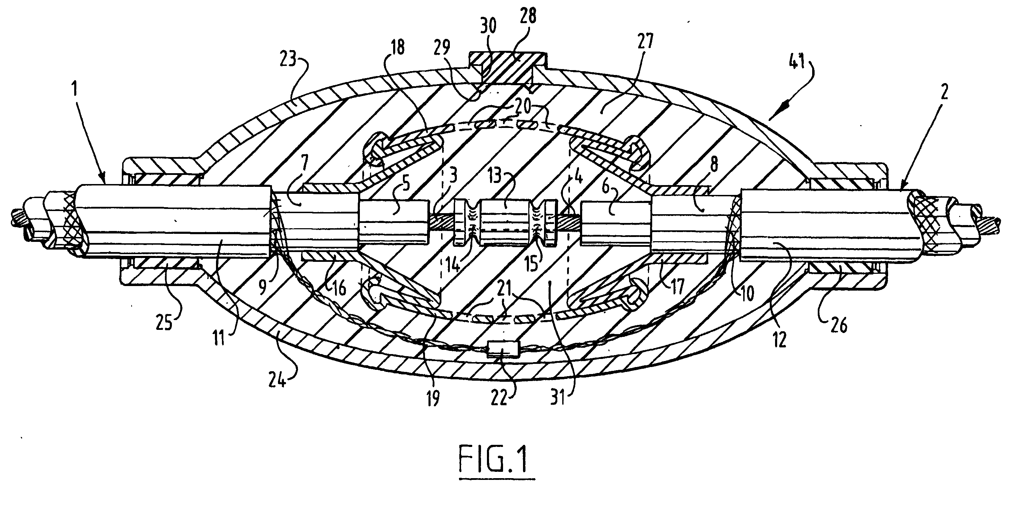

In these figures components which are identical to the components of figure 1 are designated with the same reference numerals. Functionally similar but differently embodied components are designated with the same reference numeral, with the addition however of an accent.

Sleeve 41 according to figure 1 differs in a number of respects from sleeve 42 according to figure 3.

As clearly shown in figure 2 in particular, shells 18', 19' have a general elongate form, each having a number of perforations extending in longitudinal direction and a number of perforations extending in peripheral direction. The end zones 43, 44 of shell 18' can further be coupled by means of snap connections to the complementary end zones respectively 45, 46 of shell 19'. It should be understood that shells 18' and 19' are identical but are positioned with mutually opposing orientations.

Figure 2 shows the stage of the assembly of sleeve 42 at which the connection between the conductive cable cores 3, 4 is effected after having placed semiconducting funnels 16', 17' beforehand over the respective semiconducting jackets 7, 8. A separate sheath 48 of copper wire fitting with large clearance round one of the cables 11, 12 is placed in advance, in this case round cable 12. A spring steel helical spring is arranged around cable 11, likewise fitting with large clearance.

In the shown manner shell 19' is placed such that widened edges 49, 50 of funnels 16', 17' fit into the end zones 45, 46 of shell 19'. Shell 18' is then coupled to shell 19' by means of the snap connections designated 51.

The connection between jackets 9, 10 is subsequently realized by making use of clamping element 22, as shown in figure 1.

The separate sheath 48 consisting of copper wire is thereafter pushed over shells 18',19' as according to arrows 51 while enclosing the connection between jackets 9, 10 and clamping element 22.

In order to ensure a conductive contact between sheath 48, connection 9, 22, 10 and shells 18', 19', the helical spring 52 is pushed over the placed sheath 48 as according to arrows 53. This sliding-on takes place most easily by twisting spring 52 with two hands, whereby a certain clearance is created. Once the spring has been placed at the correct position, the twisting can be ended whereby the spring contracts and can exert a clamping force on said components.

Shells 23', 24' are then placed to form the envelope.

Finally, the space 27' enclosed by this envelope is filled via filling opening 30' with for instance a silicone mass which remains liquid and can cure only in the case of disaster under the influence of penetrating water.

Not drawn is that filling opening 30' is closed with cap 28 after filling of sleeve 42 with filler mass.

## Claims

1. Cable sleeve comprising
a number of components for mutual connection, which sleeve serves as envelope for the connection between two electrical cables, each comprising only one electrically conductive core, an insulating jacket extending therearound, a semiconducting jacket extending therearound, a conductive jacket extending therearound, for instance tubular fabric of metal threads, and an insulating outer jacket extending therearound, said jackets of which cores have their respective end zones removed in stepwise manner and are thus made accessible and graspable, which sleeve after assembly comprises the following components:
a shield of electrically conductive or semiconducting material which is provided with perforations and wholly encases the mutually preconnected cores, which shield must be connected to the semiconducting jackets of both cables, which shield has an inner surface with smooth, rounded shapes; and
an envelope wholly enclosing the pre-placed shield and comprising two mutually connectable shells of plastic, for instance polyethylene, with a thickness of about 2-10 mm, preferably about 4-6 mm, wherein the connection made beforehand between the free ends of the conductive jackets of the cables is situated in the space between the envelope and the shield;
which envelope engages via respective flexible and elastic sealing rings, for instance of silicone rubber, on the insulating outer jackets of the two cables;
into which sleeve after assembly an optionally curing liquid insulating mass is poured via a filling opening present in the envelope, which insulating mass can fill the cavity inside the shield via said
perforations and which is slow-curing such that rising air bubbles can leave this cavity via the perforations.

2. Cable sleeve as claimed in claim 1, wherein the shield has two through-holes for passage of the respective cables, which holes are arranged in end zones of stretchable material.

3. Cable sleeve as claimed in claim 2, wherein the end zones are separate and each have a general funnel shape and have a mouth rim with a coupling edge bent rearward via a smooth, rounded transition zone for coupling to respective coupling edges on the free ends of a non-flexible casing provided with said perforations.

4. Cable sleeve as claimed in claim 1, wherein the conductivity of the materials of the shield lies in the range of 10²-10⁵ Ohm/cm, preferably 10³-10⁴ Ohm per centimetre.

5. Cable sleeve as claimed in claim 4, wherein the shield contains carbon, for instance carbon fibres.

6. Cable sleeve as claimed in claim 1, wherein the shield has a considerable elastic deformability.

7. Cable sleeve as claimed in claim 1, wherein the shells of the shield can be mutually coupled by snap connections.

8. Cable sleeve as claimed in claim 3, wherein the end zones consist of a semiconducting elastomer, for instance silicone rubber, EPDM, TPE.

9. Cable sleeve as claimed in claim 1, wherein the shield consists of semiconducting polycarbonate.

10. Cable sleeve as claimed in claim 1, wherein the insulating mass consists of a silicone material.

11. Cable sleeve as claimed in claim 1, wherein the insulating mass consists of polyurethane.

12. Cable sleeve as claimed in claim 1, wherein after assembly the shield is connected for electrical conduction to the mutually connected free ends of the conductive cable jackets.

13. Cable sleeve as claimed in claim 12, comprising clamping means for pressing the mutually connected free ends of the conductive cable jackets with clamping force against the shield.

14. Cable sleeve as claimed in claim 13, wherein the clamping means comprise spring means.

15. Cable sleeve as claimed in claim 1, wherein after assembly an electrically conductive non-ferromagnetic flexible casing extends round the shield in electrically conductive contact therewith.

16. Cable sleeve as claimed in claim 15, wherein the casing comprises a gauze of copper wire.

17. Cable sleeve as claimed in claims 13 and 15, wherein the clamping means hold the shield, the mutually connected free ends of the conductive cable jackets and the casing in an electrically conductive contact with each other.
